# EUROPÄISCHE PATENTSCHRIFT

(11) **EP 3 562 617 B1**
(45) Veröffentlichungstag und Bekanntmachung des Hinweises auf die Patenterteilung: **27.12.2023**
(21) Anmeldenummer: 17837940.0
(22) Anmeldetag: 31.12.2017
(51) Int. Cl.: B23Q 3/08, B27M 1/08, B23Q 3/06

(54) **BEWEGLICHE STÜTZVORRICHTUNG MIT MINDESTENS ZWEI STÜTZBÖCKEN**
MOVABLE SUPPORT DEVICE WITH AT LEAST TWO SUPPORT BLOCKS
DISPOSITIF SUPPORT MOBILE COMPRENANT AU MOINS DEUX CHEVALETS

(30) Priorität: 31.12.2016 DE 102016015586; 30.12.2017 DE 102017012078
(43) Veröffentlichungstag der Anmeldung: 06.11.2019
(73) Patentinhaber: Zimmer, Martin, 77866 Rheinau (DE); Zimmer, Günther, 77866 Rheinau (DE)
(72) Erfinder: Zimmer, Martin, 77866 Rheinau (DE); Zimmer, Günther, 77866 Rheinau (DE)
(74) Vertreter: Thämer, Wolfgang
(86) Internationale Anmeldenummer: PCT/DE2017/000437
(87) Internationale Veröffentlichungsnummer: WO 2018/121809

(56) Entgegenhaltungen:
- EP-A1- 2 796 259
- EP-A2- 1 207 028
- DE-A1- 10 321 698
- DE-A1-102015 014 585

## Beschreibung

Die Erfindung betrifft eine Vorrichtung mit einer beweglichen Stützvorrichtung, einem Werkstückstützgatter und einem Werkstücktransportsystem, wobei die bewegliche Stützvorrichtung in einer Aussparung des auf einem Maschinenbett angeordneten Werkstückstützgatters mit vorgelagertem Werkstücktransportsystem mit Werkstückwagen für platten- und/oder brettartige Werkstücke angeordnet ist.

Aus der DE 10 2013 221 725 A1 ist ein Verfahren und eine Vorrichtung zum Bearbeiten von Werkstücken bekannt. Die Werkstücke werden auf dem Maschinenbett auf horizontal ausgerichteten Förderrollen bewegt und abgestützt.

Die EP 2 796 259 A1, welche die Basis für den Oberbegriff von Anspruch 1 darstellt, beschreibt ein vertikales Bearbeitungszentrum zur Bearbeitung von plattenartigen Werkstücken. Dieses verfügt über ein im Wesentlichen vertikal angeordnes Werkstückstützgatter, unterhalb dessen nebeneinander zwei werkstücktragende Rollbahnen angeordnet sind, von denen eine höhenverstellbar ist. Zwischen den Rollbahnen und dem Werkstückstützgatter ist ein Führungssystem angeordnet, das einen breiten mit einem Spindelantrieb versehenen Führungswagen lagert. Der Führungswagen hat mehrere Saugelemente, mit denen er die rückseitig angesaugten Werkstücke entlang dem Werkstückstützgatter bewegen kann.

Aus der EP 1 207 028 A2 ist eine Bohrvorrichtung zum Bearbeiten von Platten aus Holz, Kunststoff oder Aluminium bekannt. Tnnerhalb der Bohrvorrichtung werden die Platten in vertikaler Richtung zwischen einem untenliegenden umlaufenden Transportband und einer Reihe obenliegender Andrückrollen eingespannt. Vor der zu bearbeitenden Platte ist in einem ortsfesten Maschinenständer ein auf- und abwärts sowie vor- und zurück verfahrbarer Revolverkopf angeordnet. Zur Abstützung der Bearbeitungskräfte der Werkzeuge des Revolverkopfs sind mehrere höhengestaffelt angeordnete Gruppen aus Abstützrollen an einem Traggerüst positioniert.

Der vorliegenden Erfindung liegt die Problemstellung zugrunde, eine Stützvorrichtung zu entwickeln, die im Bereich der Werkstückbearbeitungsstelle die Werkstücke gegen die durch die Werkstückbearbeitung entstehende Kräfte abstützt und/oder fixiert.

Diese Problemstellung wird mit den Merkmalen des Hauptanspruchs gelöst. Dabei weist die Stützeinrichtung mindestens zwei Stützböcke auf, die quer zur Verfahrrichtung der Transportwagen aus einer Position hinter der Ebene der Stützfläche in eine Position in der Ebene der Stützfläche fremdangetrieben verschiebbar sind. Ein erster Stützbock hat mindestens zwei abstützende und fixierende Saugelemente zum Fixieren des oder der Werkstücke. Ein zweiter Stützbock weist mindestens ein abstützendes Gleitelement auf.

Weitere Einzelheiten der Erfindung ergeben sich aus den Unteransprüchen und der nachfolgenden Beschreibung mindestens einer schematisch dargestellten Ausführungsform.
- Figur 1:: perspektivische Ansicht der Bearbeitungsstation von vorn;
- Figur 2:: perspektivische Ansicht der beweglichen Stützvorrichtung von schräg vorn; Figur 1;
- Figur 3:: perspektivische Ansicht der beweglichen Stützvorrichtung von schräg hinten;
- Figur 4:: Schnitt durch den unteren Teil der Stützvorrichtung mit einem Verstellgetriebe zur Verstellung zweier Stützböcke;
- Figur 5:: Schnitt durch das Verstellgetriebe: Der Saugerstützbock ist ausgefahren;
- Figur 6:: Schnitt durch das Verstellgetriebe: Der Gleiterstützbock ist ausgefahren.

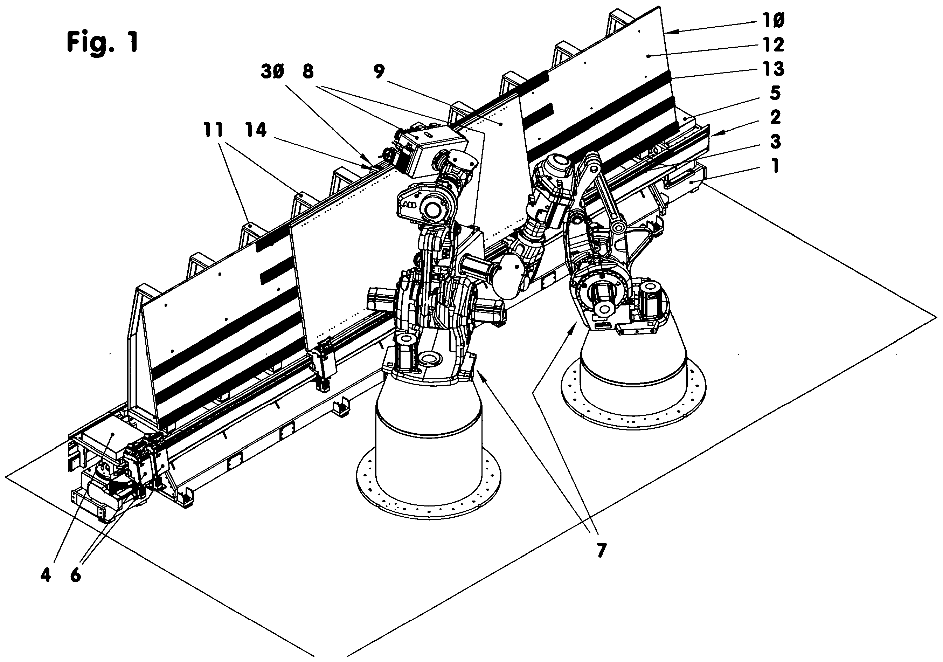

Die Figur 1 zeigt eine Bearbeitungsstation zum Bearbeiten von platten und/oder brettartigen Werkstücken (9). Dazu hat die Bearbeitungsstation ein geradliniges langgestrecktes Maschinenbett (1), auf dem ein Werkstückstützgatter (10) aufgebaut ist. Um das Werkstückstützgatter (10) herum befindet sich ein Werkstücktransportsystem (2). Letzteres besteht aus zwei parallelen Transportschienen (3), die jeweils endseitig vor Drehscheiben (4, 5) enden. Auf den vor dem Werkstückstützgatter (10) gelegenen Schienen (3) bewegen sich - ggf. zu Gruppen zusammengefasste - selbstfahrende Werkstückwagen (6), die die Werkstücke (9) entlang dem Werkstückstützgatter (10) transportieren.

Das Werkstückstützgatter (10) dient zur Anlage der platten- oder brettförmigen Werkstücke (9), die beispielsweise aus Werkstoffen wie Holz, Spanplatten, Gipskartonagen, Faserzement oder dergleichen gefertigt sind. Zu diesen Werkstoffen zählen auch Verbundwerkstoffe und Aluminiumlegierungen.

Beispielsweise mittig hat das Werkstückstützgatter (10) eine Aussparung, in der eine spezielle Stützeinrichtung (30) auf dem Maschinenbett (1) gelagert ist. Gegenüber der Stützeinrichtung (30) und jenseits des Werkstücks (9) sind z.B. zwei Handhabungsgeräte (7) angeordnet, die jeweils eine Multifunktionseinheit (8) tragen und führen. Die Handhabungsgeräte (7) sind hier beispielsweise Gelenkroboter mit einer sogenannten RRR-Kinematik. Jede Multifunktionseinheit (8) weist eine Vielzahl gleichartiger und/oder verschiedener Werkzeuge auf, mit denen in das Werkstück Bohrungen, Ausnehmungen, Schlitze und dergleichen eingearbeitet werden können.

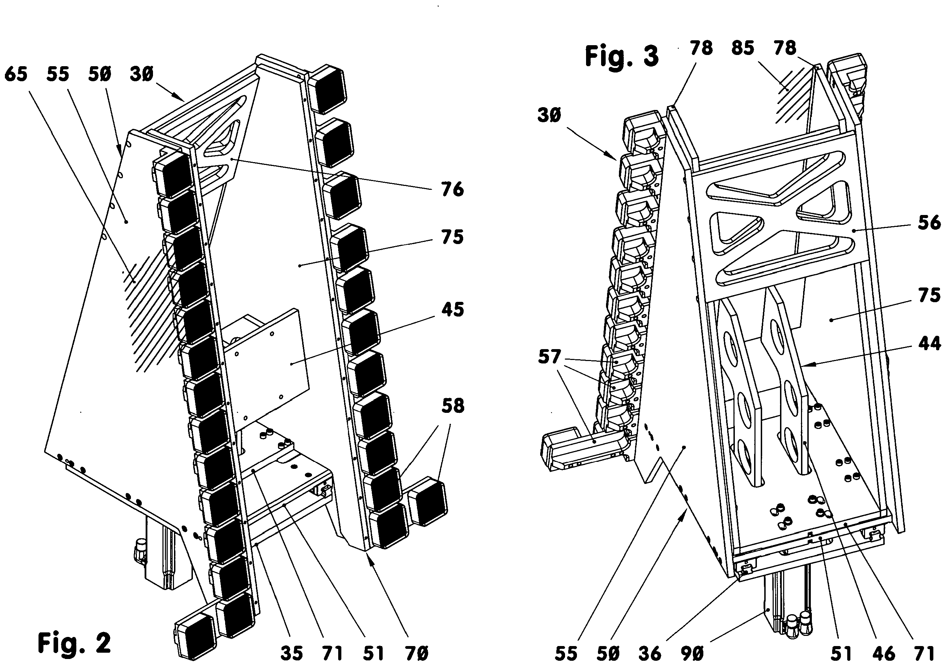

Die Figuren 2 und 3 zeigen eine Stützeinrichtung (30) aus zwei verschiedenen Richtungen. Die in Figur 2 dargestellte Stützeinrichtung (30) weist mit ihrer Vorderseite nach vorn. Die Stützeinrichtung (30) besteht aus zwei ineinander verschachtelten Stützböcken (50, 70). Jeder Stützbock(50, 70) ist eine Art Turm, der im Wesentlichen aus vier größeren Bauteilen besteht. Das sind jeweils zwei z.B. baugleiche Seitenwangen (55, 75), eine Tragplatte (51, 71) und eine Versteifungsplatte (56, 76). Die beispielsweise parallel angeordneten Seitenwangen (55, 75) werden mittels der Tragplatte (51, 71) und der Versteifungsplatte (56, 76) auf Abstand gehalten. Die Seitenwangen (55, 75) beider Stützböcke (50, 70) haben jeweils Vorderkanten die mit der jeweiligen Tragplatte (51, 71) einen Winkel von z.B. 80 Winkelgraden einschließen. In diesem Winkel ist auch das Werkstückstützgatter (10) mit seiner Stützfläche (65, 75) gegen eine Horizontalebene geneigt.

Die rückseitigen Kanten der Seitenwangen (55, 75) schließen mit einer Horizontalebene einen Winkel von z.B. 72 Winkelgraden ein. Bei jedem Stützbock (50, 70) befindet sich im oberen Bereich der Seitenwangen (55, 75), parallel zu den rückwärtigen Kanten, die jeweilige Versteifungsplatte (56, 76). Jede Versteifungsplatte (56, 76) hat die Form einer rechteckigen Platte mit vier Ausnehmungen. Die Ausnehmungen haben jeweils eine dreieckförmige Kontur, so dass zwischen den vier Ecken der jeweiligen Versteifungsplatte (56, 76) zwei diagonale Rippen stehen bleiben.

Jede Saugerseitenwange (55) trägt an ihrer Außenseite eine Vielzahl zum Beispiel gleichartiger Saugerträger (57) die jeweils zueinander einen z.B. konstanten Abstand haben. An jedem der hier übereinander angeordneten Saugerträger (57) befindet sich z.B. jeweils ein Saugelement (58), das als Vakuumsauger aufgebaut ist.

Im Bereich des unteren Endes der Saugerseitenwangen (55) sind längere Saugerträger (57) angeordnet, die jeweils zwei nebeneinanderliegende Saugelemente (58) aufweisen. Mithilfe der übereinanderliegenden Saugelemente (58), deren Saug- bzw. Anlageebene eine gedachte Stützfläche (65) bildet, werden in der Regel große plattenartige Werkstücke (9) gegen den Saugerstützbock (50) gesaugt, um die Werkstücke (9) zum Beispiel beim Bohren oder Fräsen fest am Werkstückstützgatter (10) entgegen der Werkzeugauszugskräfte zu halten. Mit den zum Beispiel vier unten liegenden Saugelementen (58) werden am Werkstückstützgatter (10) z.B. schmale, brettartige Werkstücke fixiert.

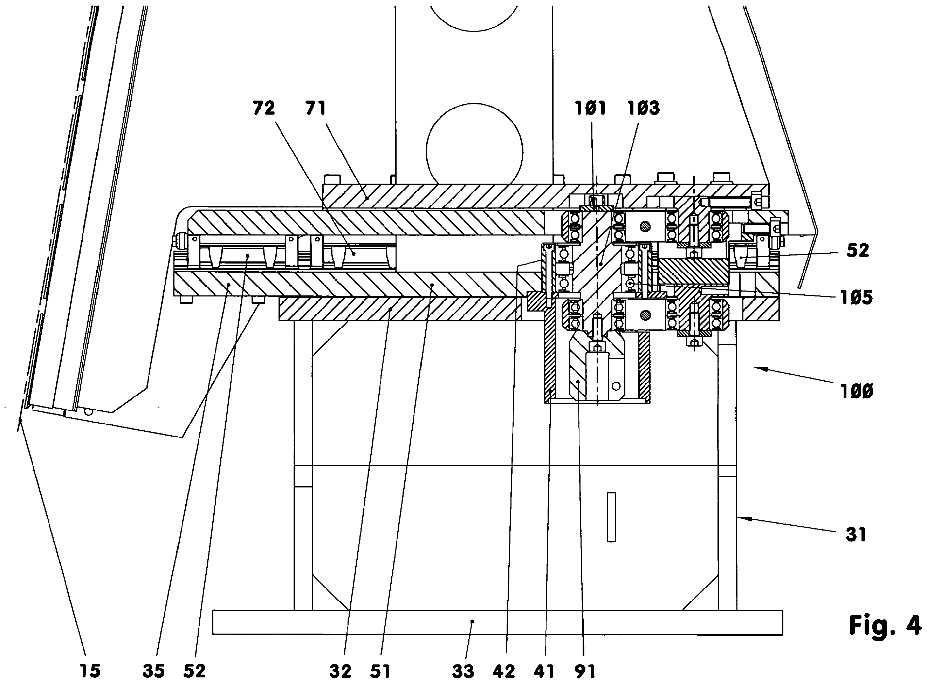

Nach Figur 4 ist der Saugerstützbock (50) auf einer Bodenplatte (35) verschiebbar gelagert. Die z.B. rechteckige Bodenplatte (35) sitzt auf einem Untergestell (31). Das Untergestell (31) besteht dazu aus einer Untergestellbodenplatte (33), die direkt auf dem Maschinenbett (1) aufgeschraubt ist, einer Untergestelltischplatte (32), auf der die Bodenplatte (35) montiert ist und einigen vertikal orientierten Stützplatten, die die beiden parallelen Untergestellboden- und -tischplatten (33, 32) auf einem konstruktiv festgelegten Abstand halten. Die Höhe des Untergestells (31) ist genauso hoch gewählt, dass die am weitesten unten angeordneten Saugelemente (58) des Saugerstützbocks (50) wenige Millimeter oberhalb der Werkstückwagen (6) bzw. derer Spannzangen liegen.

Auf der Bodenplatte (35) sind entlang der langen Seitenkanten der Bodenplatte (35) jeweils zwei parallel zueinander verlaufende Führungsschienen (36) aufgeschraubt, vgl. Figur 3. Auf jeder der Führungsschienen (36) sitzen vier Führungswagen (52). Die pro Führungsschiene (36) außenliegenden Führungswagen (52) lagern die Saugertragplatte (51), vgl. Figur 4.

Die Saugertragplatte (51) hat oberhalb jeder Führungsschiene (36) z.B. zwei Durchbrüche, durch die auf den beiden inneren Führungswagen (72) aufsitzende Führungswagendistanzstücke (73) befestigt sind. Auf denen wiederum ist die Gleitertragplatte (71) gelagert. Seitlich an der Gleitertragplatte (71) sind die Gleiterseitenwangen (75) befestigt. Dabei sind die Außenseiten der Gleiterseitenwangen (75) z.B. nur 27 mm von den Innenseiten der Saugerseitenwangen (55) entfernt. In der sogenannten Nullstellung der Stützböcke (50, 70), wie sie in Figur 4 dargestellt ist, endet die Hinterkante der Gleitertragplatte (71) z.B. 11 mm hinter der Saugertragplatte (51). Auf diese Weise befindet sich der Gleiterstützbock (70) vollständig innerhalb des Bauraumes des Saugerstützbocks (50).

Alternativ können auf dem Maschinenbett (1) die Stützböcke (50, 70) auch nebeneinander angeordnet werden. Es ist ferner möglich, beide Stützböcke (50, 70) so ineinander zu verschachteln, dass z.B. die eine Gleiterseitenwange (75) im Saugerstützbock (50) angeordnet ist, während die andere außerhalb des Saugerstützbocks (50) liegt.

Der Gleiterstützbock (70) weist an den vorderen Stirnflächen der Gleiterseitenwangen (75) jeweils eine durchgehende Gleitschiene (78) auf, vgl. Figur 3. Beide Gleitschienen (78) spannen mit ihren vorderen Anlageflächen eine Stützfläche (85) auf. Während des Bearbeitens der Werkstücke (9), beispielsweise beim Sägen oder Fräsen einer horizontalen Längsnut, gleitet das von den Werkstückwagen (6) geführte Werkstück (9) entlang dem Werkstückstützgatter (10). Dabei rutscht es über die vorstehenden Gleitschienen (78), gegen die es aufgrund der Bearbeitungskräfte gepresst wird.

Anstelle der durchgehenden Gleitschienen (78) können auch andere Gleitelemente wie z.B. Gleitnocken, Gleitklötze oder Rollen bzw. Walzen verwendet werden. Im letzteren Fall sind die Achsen der Rollen oder Walzen parallel zu den Vorderkanten der Gleiterseitenwangen (75) orientiert.

Innerhalb des umbauten Raumes des Gleiterstützbocks (70) ist ca. mittig ein Sensorenträger (44) angeordnet. Der Sensorenträger (44) besteht aus einer Sensorenträgerplatte (45) und zwei zueinander parallel angeordneten Trägerplattenfüßen (46). Die z.B. rechteckige Sensorenträgerplatte (45), vgl. Figur 2, ist parallel zur Stützfläche (15) orientiert. Sie hat von der Stützfläche (15) einen Abstand von 15 mm. Ihre nach Figur 3 gelochten Trägerplattenfüße (46) sind starr auf die Bodenplatte (35) montiert. Beide Tragplatten (51, 71) haben dazu entsprechende Aussparungen, um beim Verfahren nicht mit den Trägerplattenfü-ßen (46) zu kollidieren. Der Sensorenträger (44) dient z.B. dem Halten von verschiedenen Sensoren, mittels derer die Werkstücke (9) ggf. über Barcodes identifiziert, gezählt und/oder zur Kontrolle vermessen werden.

Des Weiteren können auf dem Sensorenträger (44) auch ein oder mehrere Mehrkoordinatentaster oder dergleichen angeordnet werden, um die Nullposition einer gegenüber der Sensorenträgerplatte (45) positionierten Multifunktionseinheit (8) - in Bearbeitungspausen - gegenüber dem Werkstückstützgatter (10) zu vermessen. Ferner können auf dem Sensorenträger (44) z.B. Tastelemente, wie Zylinderkegel oder Würfel montiert werden, die von aus der Multifunktionseinheit (8) ausfahrbaren Tastern zu Messzwecken angefahren werden.

In Figur 4 ist das Verstellgetriebe (100), mit dessen Hilfe der Saugerstützbock (50) und der Gleiterstützbock (70) gegenüber der Bodenplatte (35) verschiebbar gelagert sind, im Schnitt in einer Neutralstellung dargestellt. In der Neutralstellung sind die Stützböcke (50, 70) gegenüber dem Werkstückstützgatter (10) genauso positioniert, dass deren Stützflächen (65, 85) nur wenige Millimeter hinter der Stützfläche (15) des Werkstückstützgatters liegen.

An der Bodenplatte (35) ist in einer Ausnehmung ein nach unten ragender Motorflansch (41) und ein darüber liegender Exzenterwellenlagerflansch (42) angeordnet. In der nach unten orientierten Zentrierung des Motorflansches (41) ist der Antrieb (90), vgl. Figur 3, zentriert angeflanscht. Der Antrieb (90) treibt über eine drehstarre Kupplung (91) eine Exzenterwelle (101) des Verstellgetriebes (100) direkt an. Die Exzenterwelle (101) ist über ihr Wellenmittelstück (103) im Exzenterwellenlagerflansch (42) in den Exzenterwellenlagern (105) gelagert sowie axial und radial fixiert. Die Exzenterwelle (101) weist oberhalb und unterhalb des Wellenmittelstücks (103) jeweils einen Exzenter (102, 104) auf.

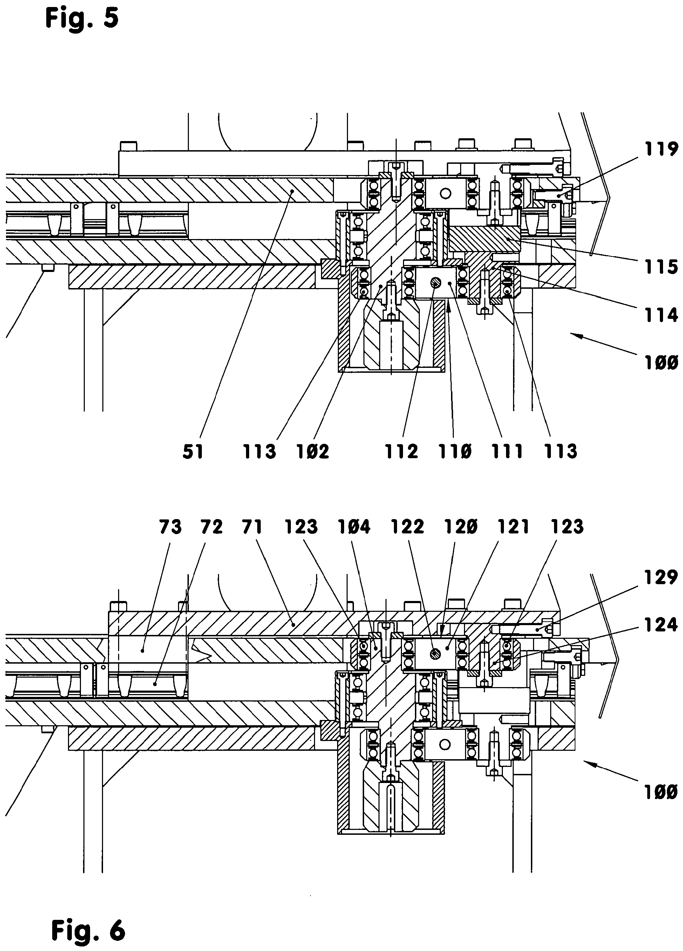

In Figur 5 ist der Schnitt des Verstellgetriebes (100) in einer Position gezeichnet, in der der Saugerstützbock (50) mit seiner Stützfläche (65) in oder vor der Stützfläche (15) des Werkstückstützgatters (10) positioniert ist. Die Stützfläche (65) liegt vor der Stützfläche (15), wenn sie zum Werkstück (9) hin versetzt ist. Der Betrag des Versatzes liegt z.B. zwischen 0,1 mm und 2 mm. Nach Figur 5 ist die Exzenterwelle (101), gegenüber ihrer Position aus Figur 4, um 90 Winkelgrade entgegen dem Uhrzeigerdrehsinn gedreht dargestellt. Auf diese Weise hat sich der Saugerexzenter (102) mit seiner Mittellinie nach links verlagert. Der Saugerexzenter (102) ist über ein Saugerpleuel (110) mit einer Saugerantriebsachse (114) gekoppelt. Die Saugerantriebsachse (114) ist über ein brückenartiges Saugerdistanzstück (115) an der Saugertragplatte (51) befestigt.

Das Saugerpleuel (110) ist z.B. eine quaderförmige Stange mit abgerundeten Stirnseiten. Am vorderen und hinteren Ende weist das Saugerpleuel (110) jeweils eine große Querbohrung auf. Beide Querbohrung sind über einen Mittenschlitz (111) miteinander verbunden. Quer zum Mittenschlitz (111) befindet sich in dessen Mitte in einer Gewindebohrung eine Klemmschraube (112). In beiden Querbohrungen sitzen jeweils zwei Saugerpleuellager (113), deren Außenringe mithilfe der Klemmschraube (112) verspannt werden. Je zwei Innenringe der vier Saugerpleuellager (113) sitzen axial fixiert zum einen auf dem Exzenter (102) und zum anderen auf der Saugerantriebsachse (114). Der Exzenter (102), das Saugerpleuel (110) und die an der Saugertragplatte (51) fixierte Saugerantriebsachse (114) bilden zusammen ein Schubkurbelgetriebe.

Um die Position der Saugerantriebsachse (114) gegenüber der Saugertragplatte (51) justieren zu können, ist nach Figur 5 links im Saugerdistanzstück (115) eine Justierschraube (119) eingeschraubt. Ihr Kopf stützt sich in einer Nut der Saugertragplatte (51) ab. Das Saugerdistanzstück (115) sitzt dazu mit seinen Befestigungsschrauben über saugertragplattenseitige Langlöcher in der Saugertragplatte (51).

Die Figur 6 zeigt einen Schnitt des Verstellgetriebes (100) in der Position, in der der Gleiterstützbock (70) nach vorn gefahren ist. In diesem Fall liegt die Stützfläche (85) des Gleiterstützbocks (70) in oder vor der Stützfläche (15) des Werkstückstützgatters (10). Hier hat der Servomotor (90) die Exzenterwelle (101) gegenüber der in Figur 4 dargestellten Ausgangslage um 90 Winkelgrade im Uhrzeigerdrehsinn geschwenkt. Die Mittellinie des Gleiterexzenters (104) hat sich gegenüber der Mittellinie des Wellenmittelstücks (103) nach vorn, in Figur 6 nach links, verlagert. In der Folge hat das Gleiterpleuel (120), das z.B. baugleich mit dem Saugerpleuel (110) ist, die Gleitertragplatte (71) und mit ihr den Gleiterstützbock (70) nach vorn gezogen. Um die Gleitertragplatte (71) mit dem Gleiterpleuel (120) kuppeln zu können, ist an ihr eine Gleiterantriebsachse (124) festgeschraubt. Auch die Gleiterantriebsachse (124) ist über eine Justierschraube (129) gegenüber der Gleitertragplatte (71) in geringem Maße verschiebbar.

### Bezugszeichenliste:

- 1: Maschinenbett
- 2: Werkstücktransportsystem
- 3: Transportschiene
- 4, 5: Drehscheiben, Umsetzer
- 6: Werkstückwagen
- 7: Handhabungsgeräte
- 8: Multifunktionseinheiten, werkzeugtragend
- 9: Werkstück, platten- und/oder brettartig

- 10: Werkstückstützgatter
- 11: Stützen
- 12: Anlehnplatten, Anlehnleisten
- 13: Bürstenreihen
- 14: Aussparung
- 15: Stützfläche, gedachte Ebene, von (10)

- 30: Stützeinrichtung, Stützvorrichtung
- 31: Untergestell
- 32: Untergestelltischplatte
- 33: Untergestellbodenplatte
- 35: Bodenplatte
- 36: Führungsschienen

- 41: Motorflansch
- 42: Exzenterwellenlagerflansch

- 44: Sensorenträger
- 45: Sensorenträgerplatte
- 46: Trägerplattenfüße, plattenartig

- 50: Saugerstützbock, Stützbock
- 51: Saugertragplatte
- 52: Führungswagen, Kugelumlaufschuhe

- 55: Saugerseitenwangen
- 56: Saugerversteifungsplatte
- 57: Saugerträger
- 58: Saugelemente, Sauger, Vakuumsauger

- 65: Stützfläche, gedachte Ebene, von (50)

- 70: Gleiterstützbock, Stützbock
- 71: Gleitertragplatte
- 72: Führungswagen, Kugelumlaufschuhe
- 73: Führungswagendistanzstücke

- 75: Gleiterseitenwangen
- 76: Gleiterversteifungsplatte
- 78: Gleitelemente, Gleitschienen

- 85: Stützfläche, gedachte Ebene, von (70)

- 90: Antrieb, Motor, Getriebemotor, Servomotor
- 91: Kupplung, drehstarr

- 100: Verstellgetriebe
- 101: Exzenterwelle
- 102: Saugerexzenter, Exzenter
- 103: Wellenmittelstück
- 104: Gleiterexzenter, Exzenter
- 105: Exzenterwellenlager

- 110: Saugerpleuel
- 111: Mittenschlitz
- 112: Klemmschraube
- 113: Saugerpleuellager, Wälzlager
- 114: Saugerantriebsachse
- 115: Saugerdistanzstück, brückenartig
- 119: Justierschraube

- 120: Gleiterpleuel
- 121: Mittenschlitz
- 122: Klemmschraube
- 123: Gleiterpleuellager, Wälzlager
- 124: Gleiterantriebsachse
- 129: Justierschraube

## Patentansprüche

1. Vorrichtung bestehend aus beweglicher Stützvorrichtung, Werkstückstützgatter (10), Maschinenbett (1) und Werkstücktransportsystem (2), wobei die bewegliche Stützvorrichtung in einer Aussparung (14) des auf dem Maschinenbett (1) angeordneten Werkstückstützgatters (10) mit vorgelagertem Werkstücktransportsystem (2) mit Werkstückwagen (6) für platten- und/oder brettartige Werkstücke (9) angeordnet ist,
- wobei das Werkstückstützgatter (10) - zum anlehnenden Abstützen der Werkstücke (9) - eine Stützfläche (15) hat, die gegenüber einer Horizontalebene eine Neigung zwischen 75 und 90 Winkelgraden einnimmt, **dadurch gekennzeichnet,**
- **dass** die Stützeinrichtung (30) mindestens zwei Stützböcke (50, 70) aufweist, die quer zur Verfahrrichtung der Werkstückwagen (6) aus einer Position hinter der Ebene der Stützfläche (15) in eine Position in der Ebene der Stützfläche (15) fremdangetrieben verschiebbar sind,
- **dass** ein erster Stützbock (50) mindestens zwei abstützende und fixierende Saugelemente (58) zum Fixieren des oder der Werkstücke (9) hat und
- **dass** ein zweiter Stützbock (70) mindestens ein abstützendes Gleitelement (78) aufweist.

2. Vorrichtung gemäß Anspruch 1, **dadurch gekennzeichnet, dass** die Stützböcke (50, 70) - zumindest über eine Bodenplatte (35) auf dem Maschinenbett (1) wälzgelagert angeordnet sind, wobei die Richtung ihres jeweiligen Verstellhubes in einer Horizontalebene liegt.

3. Vorrichtung gemäß Anspruch 1, **dadurch gekennzeichnet, dass** der einzelne Stützbock (50, 70) aus einer Trägerplatte (51, 71), zwei Seitenplatten (55, 75) und mindestens einer Aussteifungsplatte (56, 76) besteht.

4. Vorrichtung nach Anspruch 2, **dadurch gekennzeichnet, dass** beide Stützböcke (50, 70) auf der Bodenplatte (35) verschiebbar und parallel zueinander gelagert sind, wobei der Gleitelemente (78) tragende Stützbock (70) zumindest teilweise innerhalb des Saugelemente (58) tragenden Stützbockes (50) angeordnet ist.

5. Vorrichtung gemäß Anspruch 2, **dadurch gekennzeichnet, dass** beide Stützböcke (50, 70) mittels eines elektrisch, pneumatisch oder hydraulisch angetriebenen Verstellgetriebes (100) gegenüber der Bodenplatte (35) verstellbar sind.

6. Vorrichtung gemäß Anspruch 5, **dadurch gekennzeichnet, dass** das Verstellgetriebe (100) für jeden Stützbock (50, 70) ein Schubkurbelgetriebe aufweist, dessen Antriebsglied jeweils ein Exzenter (102, 104) einer zwei Exzenter aufweisenden Exzenterwelle (101) ist.

## Claims

1. A device consisting of movable support device, workpiece support grid (10), machine bed (1) and workpiece transport system (2), wherein the movable support device is arranged in a cut-out (14) in the workpiece support grid (10) arranged on the machine bed (1), with a workpiece transport system (2) placed in front and having workpiece carriages (6) for plate- and/or board-like workpieces (9),
- wherein the workpiece support grid (10) has a support face (15) for leaning support of the workpieces (9), said support face assuming an inclination of between 75 and 90 degrees relative to a horizontal plane, **characterised in that**
- the support device (30) has at least two support blocks (50, 70), which are displaceable in an externally driven manner transversely to the movement direction of the workpiece carriages (6) from a position behind the plane of the support face (15) into a position in the plane of the support face (15),
- a first support block (50) has at least two supporting and fixing suction elements (58) for fixing the workpiece(s) (9), and
- a second support block (70) has at least one supporting sliding element (78).

2. The device according to Claim 1, **characterised in that** the support blocks (50, 70) are arranged in a roller-mounted manner on the machine bed (1) at least via a baseplate (35), wherein the direction of their respective adjustment stroke lies in a horizontal plane.

3. The device according to Claim 1, **characterised in that** the individual support block (50, 70) consists of a carrier plate (51, 71), two side plates (55, 75) and at least one reinforcement plate (56, 76).

4. The device according to Claim 2, **characterised in that** both support blocks (50, 70) are mounted displaceably and parallel to one another on the baseplate (35), wherein the support block (70) carrying sliding elements (78) is arranged at least partially inside the support block (50) carrying suction elements (58).

5. The device according to Claim 2, **characterised in that** both support blocks (50, 70) are adjustable relative to the baseplate (35) by means of an electrically, pneumatically or hydraulically driven adjustment gearing mechanism (100).

6. The device according to Claim 5, **characterised in that** the adjustment gearing mechanism (100) has, for each support block (50, 70), a slider-crank mechanism, the servo drive of which is in each case an eccentric (102, 104) of an eccentric shaft (101) having two eccentrics.

## Revendications

1. Dispositif, constitué d'un dispositif de support mobile, d'une grille d'appui (10) de pièces à usiner, d'un banc de machine (1) et d'un système de transport (2) de pièces à usiner, le dispositif de support mobile étant placé dans une encoche (14) de la grille d'appui (10) de pièces à usiner, placée sur le banc de machine (1) avec un système de transport (2) de pièces à usiner monté en amont, pourvu de chariots (6) de pièces à usiner pour des pièces à usiner (9) en forme de plaques et / ou de planches,
- la grille d'appui (10) de pièces à usiner disposant, pour appuyer en les adossant les pièces à usiner (9), une surface d'appui (15), qui par rapport à un plan horizontal adopte une inclinaison comprise entre 75 et 90 degrés d'angle, **caractérisé**
- **en ce que** le système d'appui (30) comporte au moins deux chevalets (50, 70), qui sont déplaçables par entraînement extérieur à la transversale de la direction de déplacement des chariots (6) de pièces à usiner, d'une position à l'arrière du plan de la surface d'appui (15) dans une position dans le plan de la surface d'appui (15),
- **en ce qu'**un premier chevalet (50) dispose d'au moins deux éléments aspirants (58) assurant l'appui et la fixation, destinés à fixer la ou les pièces à usiner (9) et
- **en ce qu'**un deuxième chevalet (70) comporte au moins un élément coulissant (78) assurant l'appui.

2. Dispositif selon la revendication 1, **caractérisé en ce que** les chevalets (50, 70) sont placés au moins par l'intermédiaire d'une plaque d'embase (35) en étant logés sur des roulements sur le banc de machine (1), la direction de leur course d'ajustement respective se situant dans un plan horizontal.

3. Dispositif selon la revendication 1, **caractérisé en ce que** le chevalet (50, 70) individuel est constitué d'une plaque porteuse (51, 71), de deux plaques latérales (55, 75) et d'au moins une plaque de renfort (56, 76).

4. Dispositif selon la revendication 2, **caractérisé en ce que** les deux chevalets (50, 70) sont logés sur la plaque d'embase (35) en étant déplaçables et parallèles l'un à l'autre, le chevalet (70) portant des éléments coulissants (78) étant placé au moins partiellement à l'intérieur du chevalet (50) portant des éléments aspirants (58).

5. Dispositif selon la revendication 2, **caractérisé en ce que** les deux chevalets (50, 70) sont ajustables par rapport à la plaque d'embase (35) au moyen d'un mécanisme d'ajustement (100) entraîné par voie électrique, pneumatique ou hydraulique.

6. Dispositif selon la revendication 5, **caractérisé en ce que** le mécanisme d'ajustage (100) comporte pour chaque chevalet (50, 70) un mécanisme bielle-manivelle, dont l'organe d'entraînement est respectivement un excentrique (102, 104) d'un arbre excentrique (101) comportant deux excentriques.
